# EUROPEAN PATENT APPLICATION

(11) **EP 4 253 011 A1**
(43) Date of publication of application: **04.10.2023**
(21) Application number: 22165023.7
(22) Date of filing: 29.03.2022
(51) Int. Cl.: B29C 64/40, B33Y 70/00, C08F 220/06, C08L 33/02, C08L 51/04

(54) **SUPPORT MATERIAL FOR A DIGITAL MANUFACTURING SYSTEM**

(71) Applicant: i-Squared AG, 8574 Lengwil (CH)
(72) Inventor: The designation of the inventor has not yet been filed
(74) Representative: Hepp Wenger Ryffel AG

(57) **Abstract**

The invention pertains to a support material for a digital manufacturing system, comprising a first copolymer and at least one impact modifier, wherein the first copolymer comprises a plurality of carboxyl monomer units derived from acrylic acid monomers, preferably methacrylic acid monomers (MAA); a plurality of phenyl monomer units, preferably phenyl monomer units derived from styrene monomers; and a plurality of carboxylate ester monomer units derived from alkyl (meth)acrylate monomers; and wherein the impact modifier is a core-shell impact modifier.

## Description

The invention pertains to the field of digital manufacturing systems for building three-dimensional models, in particular extrusion-based 3D-printing. More specifically, the invention relates to support materials for use in such digital manufacturing systems.

Extrusion-based digital manufacturing systems are widely known and available in the art, e.g., from Stratasys. Support materials are typically deposited (typically with the same extrusion-based printing process) under overhanging portions of the object under construction. The support material adheres to the modelling material during the fabrication process of the object under construction, and can be removed from the completed object later.

Both breakaway and soluble support material are known in the art.

Breakaway support materials can be trimmed, sanded or otherwise mechanically removed. Mechanical removal of the support material can damage (details of) the printed object, which makes breakaway support materials unsuitable for many purposes.

On the other hand, soluble support materials are known that can be removed simply by placing the printed object in a bath of a suitable solvent or water. Water-soluble support materials are preferred for environmental and health considerations. However, development of water-soluble support materials is quite a challenge. Most water-soluble polymers cannot be manufactured into suitable filaments because they are too brittle. While brittleness may be countered by the addition of plasticizers, this typically impairs thermal stability, solubility and adhesion.

Many soluble support materials today are based on acrylate terpolymers (ATP). Terpolymers of ethylene, glycidyl methacrylate and butyl acrylate, as well as copolymers of ethylene and glycidyl methacrylate have been proposed to be included as impact modifier in support materials; cf. US 8,246,888 B2.

Further, support materials based on acrylate tetrapolymers such as those disclosed in EP 3 865 302 A1 have been proposed.

Providing soluble support materials in filament form to allow for extrusion-based printing processes remains a formidable challenge.

It was thus an object of the present invention to provide a support material that can be provided and used in filament form, while removal from the printed object after the printing process shall not be impaired.

This object could surprisingly be solved by a support material, and a method of making a support material, as outlined below.

A support material for a digital manufacturing system according to the invention comprises a first copolymer and at least one impact modifier, wherein the first copolymer comprises
- a plurality of carboxyl monomer units derived from acrylic acid monomers, preferably methacrylic acid monomers (MAA);
- a plurality of phenyl monomer units, preferably phenyl monomer units derived from styrene monomers; and
- a plurality of carboxylate ester monomer units derived from alkyl (meth)acrylate monomers.

Accordingly, the first copolymer is at least a terpolymer, or a copolymer made up from even more monomer units, such as a tetrapolymer or higher.

The impact modifier is a core-shell impact modifier.

Surprisingly, core-shell impact modifier have turned out to be very advantageous in order to improve the mechanical properties of water-soluble support materials such as the aforementioned ter- and tetrapolymers. As will be outlined in more detail below and in the experimental section, support materials according to the invention exhibit fully sufficient dissolution characteristics in a 1M NaOH environment, even though core-shell materials per se are typically not water soluble (within one day at 20° in pure water). As mentioned in, e.g., US 8,246,888 B2, the skilled person preferred water-soluble impact modifier for inclusion into support materials. On the contrary, it turned out that support materials according to the invention possess advantageous properties even though the core-shell impact modifier are not at all soluble in water (within one day at 20°C in pure water).

Core-shell impact modifier are widely used in the plastics industry. They are added to compounded plastic materials to improve durability and toughness, and the amount of added impact modifier depends on the level of impact resistance needed for the respective application. Core-shell impact modifier have a low T_{g} core, covered with a high(er) T_{g} shell. Core-shell impact modifier are typically added to plastics such as e.g. polycarbonate and polycarbonate blends (e.g. with ABS or PBT) to achieve superior low-temperature impact resistance.

Core-shell impact modifier have been proposed for inclusion into a polylactide (PLA) 3D-printing material; Slapnik et al., Contemporary Materials VII(2): 142-150 (DOI: 10.7251/COMEN1602142S). PLA is the most widespread 3D printing material, but it typically does not exhibit very good properties. It shows only inferior resistance to impact, which is why subsequent manipulation of PLA printed objects is difficult. Accordingly, Slapnik et al. added core-shell impact modifier of undisclosed nature to the PLA in order to improve the mechanical properties of the printed object.

However, core-shell impact modifier have not yet been proposed for inclusion into a support material, in particular not for inclusion into a support material that shall be soluble in 1M NaOH. This may be due to the fact that core-shell particles are typically used to improve low-temperature impact resistance - which not an issue for support materials in 3D printing processes.

Preferably, the core-shell impact modifier is or comprises a methyl methacrylate (MMA) shell on a polymeric core, preferably a methyl methacrylate (MMA) shell on a core of a second copolymer. The second co-polymer preferably comprises
- a plurality of unsaturated hydrocarbon monomer units derived from diene monomers, preferably butadiene; and
- a plurality of phenyl monomer units, preferably phenyl monomer units derived from styrene monomers.

Preferred core-shell impact modifier are methyl methacrylate-butadiene-styrene ("MBS") core-shell impact modifier wherein the core typically exhibits a T_{g} of ≤ -80°C. Suitable MBS core-shell impact modifier are available from Dow under the tradename Paraloid^{™}, and from Arkema under the tradename Clearstrength^{®}. Alternatively or in addition, the core-shell impact modifier is or comprises an acrylate (co-)polymer impact modifier ("AIM"). Suitable AIM impact modifier typically have a polymeric or copolymeric acrylic core with a T_{g} of ≤ -50°C, and a methyl methacrylate (MMA) shell. Suitable AIM core-shell impact modifier are available e.g. from Mitsubishi Chemicals under the tradename Metablen^{™} (types W and S).

In preferred embodiment of the invention, the first copolymer is a copolymer of:
i. a plurality of carboxyl monomer units derived from methacrylic acid monomers (MAA);
ii. a plurality of phenyl monomer units, preferably phenyl monomer units derived from styrene monomers;
iii. a plurality of first carboxylate ester monomer units derived from alkyl methacrylate monomers other than iv.; and
iv. a plurality of second carboxylate ester monomer units derived from ethylhexyl acrylate monomers.

Such terpolymers, manufacturing and uses thereof are disclosed in EP 3 865 302 A1, included herein by reference in entirety.

Preferably, the first copolymer has a melt flow rate MFR [g/lOmin] in the range of 0.1 to 12, preferably in the range of 0.5 to 8, when determined according to ISO 1133-1 (March 2012; 2.16 kg / 220°C) .

Further preferably, the first copolymer has a molecular weight (Mw) of 50'000 to 130'000 g/mol, preferably 50'000-90'000, more preferably 65'000-80'000, when determined by gel permeation chromatography according to DIN 55672-1: March 2016 (column: PSS SDV, 5µm; 40°C).

In preferred embodiments, the first copolymer has a glass transition temperature T_{g} in the range of 90 to 140°C, preferably in the range of 94°C to 120°C, more preferably in the range of 105°C to 115°C, when determined according to ISO 11357-2: July 2014 (method of point of inflection).

The support material may further comprise an epoxy resin, to improve water solubility, preferably an epoxy resin having an epoxy index (EI) of 1.5 to 5.5. The epoxy index is the number of epoxy groups per 1 kg of resin; it relates to the epoxy equivalent weight (EEW) by the formula EI = 1000/EEW. Suitable epoxy resins are e.g. available from Dow under the tradename D.E.R.^{™} (types 661 and 642U).

Preferably, the epoxy resin is novolak-based.

The support material preferably further comprises additives selected from the group consisting of plasticizers (such as e.g. PEG, adipic acid esters, sebacic acid esters), rheology modifier (such as e.g. fatty acid esters, montanic acid esters, polyethylene waxes), inert fillers (such as e.g. CaCO₃, talcum), pigments, stabilizers (such as e.g. heat stabilizers (e.g. Irganox^{®} 1010), phosphorous-based stabliziers (e.g. BASF Irgafos 168), amine-based stabilizers (e.g. BASF Tinuvin 405)), microspheres and fibers (e.g. 3M^{™} Glass Bubbles iM30K; Johns Manville StarStran^{®} 719).

In preferred embodiments, the amount of the impact modifier is in the range of 3 to 60 wt-%, preferably in the range of 5 to 40, more preferably 10 to 25 wt-%, based on the total mass of the support material. Surprisingly, the core-shell impact modifier can be added to the support material in amounts of well exceeding 20 wt-% without impairing the processing and mechanical properties of the support material. This is particularly beneficial in terms of pricing.

Preferably, the support material has a melt flow rate MFR [g/lOmin] in the range of 0.3 to 30, preferably in the range of 0.5 to 15, more preferably in the range of 1 to 3, when determined according to ISO 1133-1 (March 2012; 2.16 kg / 220°C) .

Further preferably, the support material in a wall thickness of 0.4mm (and in particular the first copolymer thereof) is soluble under stirring in 0.1M NaOH at 75°C within 180 min., preferably within 135 min., more preferably within 90 min.

The support material is preferably provided in the form of a filament strand.

A further aspect of the invention pertains to a method for preparing a support material as outlined herein, wherein the method comprises the steps of:
a) co-polymerizing acrylic acid monomers, styrene monomers, and alkyl (meth-)acrylate monomers to give a first copolymer;
b) working up the dissolved first copolymer by means of an extruder;
c) mixing the first copolymer with a core-shell impact modifier and, optionally, an epoxy resin.

Preferably, step b) is carried out in the presence of additives selected from the group consisting of plasticizers, rheology modifier, inert fillers, pigments, stabilizers, microspheres and fibers, as outlined above.

The invention will now be described in more detail, with reference to non-limiting embodiments.

### Manufacturing of the first copolymer

The manufacturing of the first copolymer has been carried out as disclosed in EP 3 865 302 A1. The material was pelletized for further use.

### Manufacturing of support material

All ingredients of support material are weighed and mixed in a Mixaco mixer CM 50, twice for 5 min. each, with 1 min. rest period in between. This pre-mix is sealed air- and water-tight in aluminum/polyethylene bags, until further use.

The pre-mix is worked-up in a unidirectional twin-screw extruder (Berstorff B34 x 46 D), with a screw diameter of 32.7 mm. The extruder comprises (in the direction of flow) an inlet zone, a melting zone, a venting zone, a mixing zone, a degassing zone with vacuum connection, and an exit zone. A filter with 100 µm is applied at the extrusion head.

The pre-mix is dosed into the inlet zone gravimetrically (Brabender Frexwoll 40), under N₂ atmosphere. The pre-mix is melted in the melting zone, at a temperature of about 210°C. In the venting zone, the screws are configured such as to reduce / eliminate the pressure imposed on the melt, and the surface is continuingly renewed so that gasses may evaporate. The temperature in the venting zone is about 200°C. Distributive / dispersive mixing of the melt is achieved in the mixing zone, at temperatures of about 220°C. The pressure on the melt is subsequently reduced again in the degassing zone, and volatile constituents are removed by applying a reduced pressure (400-600 mbar). The temperature in the degassing zone is about 210°C. The outlet zone increases the pressure to about 50-60 bar, at a temperature of about 220-230°C. A filtration unit (100 µm) is arranged upstream of the extrusion head, to hold back impurities, gelled particles, etc.; the temperature at the filtration unit is about 220-230°C. The extrusion head comprises a die plate to form the extrudates. The temperature is about 220-230°C, at a pressure of about 40-50 bar.

The extrudate is subsequently cooled (in a water bath of about 40°C, to a temperature of about 80°C), granulated, classified, dried (to a residual moisture of ≤ 0.1 wt-%) and packaged in sealed aluminum/polyethylene bags.

Quality assessment is done with DSC (to determine the T_{g}, as outlined hereinbefore), MFR (as outlined hereinbefore) and MVR (according to ISO 1133-1: March 2012; 2.16 kg / 220°C). Moisture content is measured in accordance with the Ca(OH)₂ method of DIN EN ISO 15512:2019.

### Examples

Various compositions with a tetrapolymer according to EP 3 865 302 A1 (included herein by reference) were tested (compositions A1-A6, Table 1), as well as various compositions with a terpolymer according to EP 2 041 192 B1 (included herein by reference); compositions B1-B6, Table 2:

**Table 1:**

| # | MW [kDa] | Impact modifier | | Flow promoter | Thermal stabiliser | MFR | Results (qualitative) [1:not suitable ... 5: very good] | | | |
|---|---|---|---|---|---|---|---|---|---|---|
| | | Type | % [weight] | | | | MFR | ductility | solubility | workability on printer |
| A1 | 100-120 | Paraloid EXL 2668 | 10 | Genioplast S | | 0.2-0.6 | 2 | 4 | 2 | 2 |
| A2 | 80-100 | BYK-LP T24063 | 15-25 | Genioplast S | Euronox 10 | 3-4 | 5 | 2 | 1 | 1 |
| A3 | 80-100 | SCONA TPEV 1110 PB | 15-25 | | | 2-3 | 3 | 1 | 2 | 1 |
| A4 | 70-80 | Paraloid EXL 2668 | 20-30 | Licowax C | Euronox 10 | 1-2 | 3 | 5 | 4 | 5 |
| A5 | 65-75 | Paraloid EXL 2668 | 15-25 | Licowax C | Euronox 10 | 2-3 | 4 | 5 | 5 | 5 |
| A6 | 80-100 | SCONA TSPOE 1002 GBL | 15-25 | Genioplast S | Euronox 10 | 2-3 | 3 | 1 | 2 | 1 |

**Table 2:**

| # | MW [kDa] | Impact modifier | | Flow promoter | Thermal stabiliser | MFR | Results (qualitative) [1:not suitable ... 5: very good] | | | |
|---|---|---|---|---|---|---|---|---|---|---|
| | | Type | % [weight] | | | | MFR | ductility | solubility | workability on printer |
| B1 | 100-110 | Paraloid EXL 2668 | 10-12 | Genioplast S | | 0.5-0.9 | 2 | 4 | 2 | 2 |
| B2 | 85-100 | BYK-LP T24063 | 20-25 | Genioplast S | Euronox 10 | 4-5 | 5 | 2 | 1 | 1 |
| B3 | 80-100 | SCONA TPEV 1110 PB | 15-25 | Licowax C | | 2-3 | 3 | 1 | 2 | 1 |
| B4 | 70-80 | Paraloid EXL 2668 | 20-30 | Licowax C | Euronox 10 | 1-2 | 3 | 4 | 4 | 5 |
| B5 | 65-75 | Paraloid EXL 2668 | 20-25 | Licowax C | | 2-3 | 4 | 4 | 3 | 5 |
| B6 | 80-100 | SCONA TSPOE 1002 GBL | 20-25 | Genioplast S | Euronox 10 | 2-3 | 3 | 1 | 2 | 1 |

Flow promoter and thermal stabiliser were included as indicated in the tables, as customary in the art. The results show that compositions with a core-shell impact modifier (such as e.g. Paraloid EXL 2668) perform surprisingly good in terms of ductility. Further, and in particular in conjunction with a copolymer of a molecular weight (MW) in the range of 50 - 90 kDa, workability on a 3D printer is improved over compositions with other impact modifier.

## Claims

1. Support material for a digital manufacturing system, comprising a first copolymer and at least one impact modifier, wherein the first copolymer comprises
- a plurality of carboxyl monomer units derived from acrylic acid monomers, preferably methacrylic acid monomers (MAA);
- a plurality of phenyl monomer units, preferably phenyl monomer units derived from styrene monomers; and
- a plurality of carboxylate ester monomer units derived from alkyl (meth)acrylate monomers;
and wherein the impact modifier is a core-shell impact modifier.

2. Support material according to claim 1, wherein the core-shell impact modifier is or comprises a methyl methacrylate (MMA) shell on a polymeric core, preferably a methyl methacrylate (MMA) shell on a core of a second copolymer.

3. Support material according to any of claims 1 or 2, wherein the second co-polymer comprises
- a plurality of unsaturated hydrocarbon monomer units derived from diene monomers, preferably butadiene; and
- a plurality of phenyl monomer units, preferably phenyl monomer units derived from styrene monomers.

4. Support material according to any of claims 1 to 3, wherein the core-shell impact modifier is a methyl methacrylate-butadiene-styrene ("MBS") core-shell polymer.

5. Support material according to any of claims 1 or 2, wherein the core-shell impact modifier is an acrylate impact modifier ("AIM").

6. Support material according to any one of the preceding claims wherein the first copolymer is a copolymer of:
i. a plurality of carboxyl monomer units derived from methacrylic acid monomers (MAA);
ii. a plurality of phenyl monomer units, preferably phenyl monomer units derived from styrene monomers;
iii. a plurality of first carboxylate ester monomer units derived from alkyl methacrylate monomers other than iv.; and
iv. a plurality of second carboxylate ester monomer units derived from ethylhexyl acrylate monomers.

7. Support material according to any one of the preceding claims, wherein the first copolymer has a melt flow rate MFR [g/lOmin] in the range of 0.1 to 12, preferably in the range of 0.5 to 8, when determined according to ISO 1033-1, 2.16 kg / 220°C.

8. Support material according to any one of the preceding claims, wherein the first copolymer has a molecular weight (Mw) of 50'000 to 130'000 g/mol, preferably 50'000-90'000, more preferably 65'000-80'000, when determined by gel permeation chromatography according to DIN 55672-1:2016-03.

9. Support material according to any of the preceding claims, wherein the first copolymer has a glass transition temperature T_{g} in the range of 90 to 140°C, preferably in the range of 94°C to 120°C, more preferably in the range of 105°C to 115°C, when determined according to ISO 11357-2:2013-05.

10. Support material according to any one of the preceding claims, wherein the support material further comprises additives selected from the group consisting of plasticizers, rheology modifier, inert fillers, pigments, stabilizers, microspheres and fibers.

11. Support material according to any of the preceding claims, wherein the amount of the impact modifier is in the range of 3 to 60 wt-%, preferably in the range of 5 to 40, more preferably 10 to 25 wt-%, based on the total mass of the support material.

12. Support material according to any of the preceding claims wherein the support material has a melt flow rate MFR [g/lOmin] in the range of 0.3 to 30, preferably in the range of 0.5 to 15, more preferably in the range of 1 to 3, when determined according to ISO 1033-1, 2.16 kg / 220°C.

13. Support material according to any one of the preceding claims wherein the support material in a wall thickness of 0.4 mm, in particular the first copolymer of the support material, is soluble under stirring in 0.1M NaOH at 75°C within 180 min., preferably within 135 min., more preferably within 90 min.

14. Support material according to any one of the preceding claims, in the form of a filament strand.

15. Method for preparing a support material according to any one of the preceding claims, wherein the method comprises the steps of:
a) co-polymerizing
- acrylic acid monomers, preferably methacrylic acid monomers (MAA);
- phenyl monomer units, preferably styrene monomers; and
- alkyl (meth)acrylate monomers to give a first copolymer;
b) mixing the first copolymer with a core-shell impact modifier and, optionally, an expoxy resin;
c) working up the dissolved first copolymer by means of an extruder.

16. Method according to claim 15, wherein step b) is carried out in the presence of additives selected from the group consisting of plasticizers, rheology modifier, inert fillers, pigments, stabilizers, microspheres and fibers.
